# EUROPÄISCHE PATENTSCHRIFT

(11) **EP 2 247 162 B1**
(45) Veröffentlichungstag und Bekanntmachung des Hinweises auf die Patenterteilung: **06.01.2016**
(21) Anmeldenummer: 10169261.4
(22) Anmeldetag: 12.06.2008
(51) Int. Cl.: H05B 33/08

(54) **Betriebsgerät zum Betreiben einer Lichtquelle, insbesondere LED**
Apparatus for operating a light source, in particular LED
Appareil pour opérer une source lumineuse, notamment une DEL

(30) Priorität: 15.06.2007 DE 102007027551
(43) Veröffentlichungstag der Anmeldung: 03.11.2010
(62) Teilanmeldung aus: 08773407.5
(73) Patentinhaber: Tridonic GmbH & Co KG, 6851 Dornbirn (AT)
(72) Erfinder: Zudrell-Koch, Stefan, 6845 Hohenems (AT); Barth, Alexander, 6861 Alberschwende (AT)
(74) Vertreter: Rupp, Christian

(56) Entgegenhaltungen:
- EP-A- 1 608 206
- US-A- 4 988 889
- US-A1- 2006 066 258
- US-B1- 6 369 525
- US-B1- 6 504 267
- LASZLO BALOGH ET AL: 'Unique Cascaded Power Converter Topology For High Current Low Output Voltage Applications' 31 Dezember 2001, XP055133900
- SEMTECH: 'High Performance Secondary Side Controller with Synchronous Rectifier', [Online] 01 Juni 2005, Gefunden im Internet: <URL:http://www.semtech.com/images/datashee t/sc4910.pdf> [gefunden am 2005-06-01]

## Beschreibung

Die vorliegende Erfindung bezieht sich allgemein auf das Gebiet der Betriebsgeräte für Leuchtmittel, wie bspw. Gasentladungslampen oder Leuchtdioden (LEDs).

In unterschiedlichen Anwendungsgebieten der Lichttechnik, besonders im Bereich LED, OLED und Notlicht gibt es die Anforderung, eine galvanische Trennung vergleichbar zu elektronischen Transformatoren vorzusehen, so dass dann die Installation nicht mehr zwangsweise durch einen ausgebildeten Fachmann durchgeführt werden muss. Es soll also das Leuchtmittel und/oder die Steuerelektronik auf einem von der Versorgungsnetzspannung galvanisch getrennten Potential arbeiten.

Es ist bereits bekannt, einen zweistufigen Ansatz zu verwenden. Dabei wird ein Wandler (Konverter), der die Leuchtmittel versorgt, unter Potentialtrennung über eine Steuerschaltung auf der Netzspannungsseite (Primärseite der Potentialtrennung) angesteuert. Falls Messsignale von der Sekundärseite der Potentialtrennung, also insbesondere aus dem Bereich der Leuchtmittel zu der Steuerschaltung zurückgeführt werden sollen, ist für diese Rückführung ebenfalls eine Potentialtrennung vorgesehen. Die Ansteuerung auf der Sekundärseite der Potentialtrennung erfolgt durch eine weitere Steuerschaltung, die eine von der erstgenannten, auf Netzspannungspotential liegenden Steuerschaltung getrennt ist.

Zudem sind bekannt die Druckschriften EP 1 608 206 A, US 2006/066258 A1, US 6,369,525 B1, US 6,504,267 B1 und US 4,988,889 A sowie die Dokumente "Unique Cascadeded Power Converter Topology for High Curent Low Voltage Output Applications" von Lazlo.Balogh et al., 31. Dezember 2001, und "High Performance Secondary Side Controller with Synchronous Rectifier", Semtech, 1. Juni 2005.

Die Erfindung sieht nunmehr eine verbesserte Technik zur Potentialtrennung in Betriebsgeräten für Leuchtmittel vor.

Diese Aufgabe wird gelöst durch die Merkmale der unabhängigen Ansprüche. Die abhängigen Ansprüche bilden den zentralen Gedanken der Erfindung in besonders vorteilhafter Weise weiter.

Ein erster Aspekt der Erfindung bezieht sich auf ein Betriebsgerät zum Betreiben einer Lichtquelle, insbesondere einer LED, nach Anspruch 1.

Die erste Wandlerstufe kann zumindest einen Leistungsschalter aufweisen, der durch die Steuereinheit unter Potentialtrennung angesteuert ist.

Die zweite Wandlerstufe kann zumindest einen Leistungsschalter aufweisen, der durch die Steuereinheit vorzugsweise ohne Potentialtrennung angesteuert ist.

Die zweite Potentialtrennungseinheit in die Steuereinheit bspw. mittels integrierter Luftspule integriert ist oder als externer Transformator ausgebildet ist.

Auf der Sekundärseite des ersten Potentialtrennungselementes kann ein Energiespeicherelement bspw. in Form eines Kondensators oder einer Batterie vorgesehen sein, an dem eine stabilisierte Zwischenspannung zur Versorgung der zweiten Wandlerstufe bereitgestellt ist.

Ein weiterer Aspekt der Erfindung bezieht sich auf ein Betriebsgerät zum Betreiben einer Lichtquelle, insbesondere einer LED, nach Anspruch 5.

Der Steuereinheit können Messignale zurückgeführt sein, die sämtlich auf der Primärseite des ersten Potentialtrennungselementes abgegriffen sind.

Der Steuereinheit können Messignale von der Sekundärseite des ersten Potentialtrennungselementes unter Potentialtrennung oder optisch zurückgeführt werden

Die erste Wandlerstufe und die erste Potentialtrennungseinheit in eine Schaltung integriert sein.

Die erste Wandlerstufe und die erste Potentialtrennungseinheit können in Form eines Sperrwandlers (Flyback-Konverter) oder eines Vorwärtswandlers ausgeführt sein, der vorzugsweise diskontinuierlich betrieben ist.

Die erste Wandlerstufe und die erste Potentialtrennungseinheit können in Form eines Vorwärtswandlers ausgeführt sein, der resonant diskontinuierlich betrieben ist.

Dem Betriebsgerät können externe Informationen oder Befehle zugeführt sein.

Ein weiterer Aspekt der Erfindung bezeiht sich auf eine Notlichtbeleuchtung nach Anspruch 14.

Weitere Merkmale, Eigenschaften und Vorteile der Erfindung sollen nunmehr unter Bezugnahme auf die begleitenden Zeichnungen anhand von rein illustrativen Ausführungsbeispielen erläutert werden.

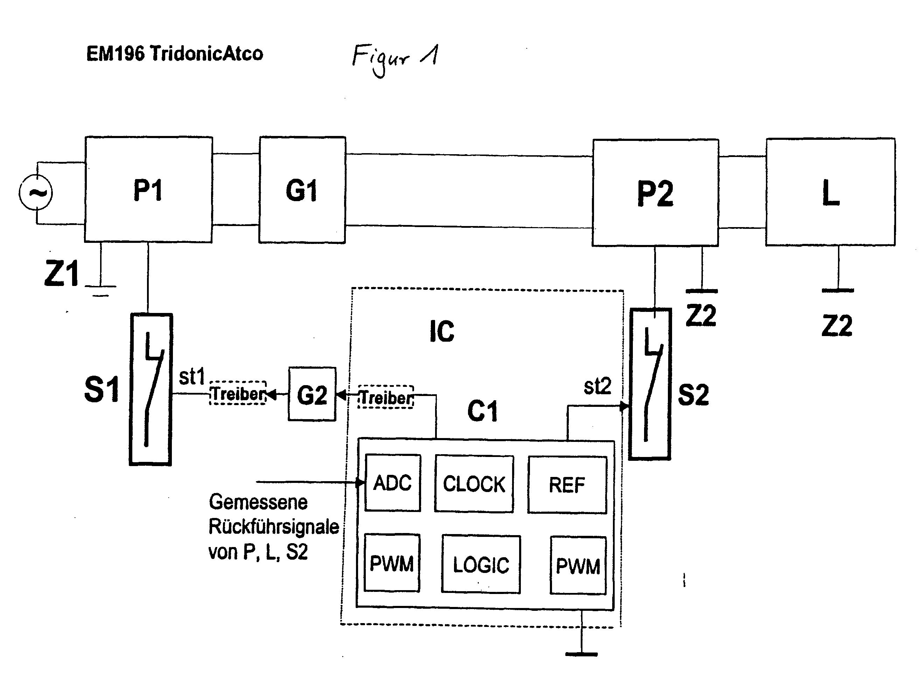

- Fig. 1: zeigt eine schematische Ansicht des Betriebsgeräts für Leuchtmittel, insbesondere für LEDs, gemäß der vorliegenden Erfindung,
- Fig. 2: zeigt eine Ausgestaltung, bei der eine erste Potentialtrennungsstufe als Vorwärtswandler (Forward-Konverter) ausgeführt ist, der in einer diskontinuierlichen Betriebsart betrieben ist,
- Fig. 3: zeigt eine Abwandlung von Figur 2 dahingehend, dass der Vorwärtswandler für eine kontinuierliche Betriebsweise ausgelegt ist,
- Fig. 4: zeigt eine Ausführungsform, bei der die erste Potentialtrennungsstufe als Flyback-Konverter ausgebildet ist,
- Fig. 5: zeigt eine Ausführungsform, bei der die zweite Wandlerstufe als Buck-Boost-Konverter ausgebildet ist,
- Fig. 6: zeigt eine Ausgestaltung, bei der die digital integrierte Steuerschaltung vom Netzspannungspotential nicht potentialgetrennt ist und die erste Wandlerstufe als Vorwärtswandler ausgebildet ist,
- Fig. 7: zeigt eine Abwandlung von Figur 6 dahingehend, dass die zweite Wandlerstufe als Buck-Boost-Konverter ausgebildet ist, und
- Fig. 8: zeigt ein Ausführungsbeispiel mit kombinierter erster Wandlerstufe.

Die vorliegende Erfindung beschreibt ein solches System. Eine Leistungswandlerstufe P1 ist mit Wechselspannung versorgt und hat ein Bezugspotential Z1. Die Leistungswandlerstufe P1 wird durch einen Schalter (bspw. Transistor) S1 getaktet.

Eine Steuereinheit C1 (bspw. ein IC wie bspw. ein ASIC, insbesondere als Digitalschaltung ausgebildet) steuert bspw. mittels PWM-Signalen den Schalter S1 über eine galvanische Trennung G2 an. Die vorzugsweise digitale Steuereinheit C1 kann einen internen Treiber aufweisen. Alternativ oder zusätzlich kann auch ein Treiber zwischen der galvanischen Trennung G2 und dem Schalter S1 vorgesehen sein. Ein Treiber für den (bspw. MOSFET-)Schalter S1 kann dabei vor der galvanischen Trennung und/oder nach der galvanischen Trennung G2 vorgesehen sein.

Zu der digitalen Steuereinheit C1 können Rückführungssignale zurückgeführt werden, die als Istwerte zur Regelung des Leuchtmittelbetriebs ausgewertet werden. Die Rückführsignale können dabei aus dem Bereich des Lastkreises L, der das Leuchtmittel (bspw. eine oder mehrere LEDs) aufweist, dem Bereich eines weiteren Schalters S2 (bspw. Schalterstrom bei eingeschaltetem Schalter S2) oder einer von mehreren Leistungswandlerstufen (Konvertern) P1, P2 stammen.

G1 und G2 können Trafos sein. Dabei können die Trafos G1, G2 auf denselben Kern gewickelt sein.

Die digitale Steuereinheit C1 weist auf einen Taktgeber (Clock), einen AD-Wandler (ADC), Referenzspannungen, eine Logikschaltung und PWM (Pulsbreitenmodulation)-Treiber für die Schalter S1 und S2.

Die erste Leistungswandlerstufe P1 ist über eine galvanische Trennung G1 mit einer zweiten Leistungswandlerstufe P2 verbunden, die ein zweites, mit dem ersten Bezugspotential unterschiedliches Bezugspotential Z2 aufweist.

Die Leistungswandlerstufen P1, P2 können als Vorwärtswandler oder als Flyback-Konverter ausgebildet sein.

Ein Schalter S2, der ebenfalls von einer PWM-Einheit der Steuereinheit C1 (ohne Potentialtrennung) angesteuert wird, taktet die zweite Leistungswandlerstufe P2.

Gemäss der Erfindung kann somit eine einzige Schaltung (insbesondere ein einziger IC wie bspw. ein ASIC) sowohl (potentialgetrennt) einen Konverter P1 auf Netzspannungspotential wie auch (ohne galvanische Trennung) den von der Netzspannung galvanisch getrennten Konverter P2 ansteuern.

Die zweite Leistungswandlerstufe P2 versorgt einen Last kreis, der das Leuchtmittel L aufweist oder nur aus diesem besteht und der dasselbe Bezugspotential wie die zweite Leistungswandlerstufe P2 aufweist.

Die Erfindung sieht also ein Betriebsgerät zum Betreiben einer Lichtquelle, insbesondere einer LED, vor. Das Betriebsgerät kann aufweisen:
- Eine erste Leistungswandlerstufe P1 mit Bezugspotential Z1,
- Zumindest einen Leistungsschalter S1 der die Wandlerstufe P1 taktet,
- Eine digitale Steuereinheit C1 bestehend aus einem Taktgeber ("Clock"), einem AD-Wandler (ADC), Referenzspannungen, einer Logikschaltung und einem PWM (Pulsbreitenmodulation)-Treiber,
- Eine galvanische Entkopplung G1,
- Eine zweite Leistungswandlerstufe P2 mit Bezugspotential Z2,
- Zumindest einen Leistungsschalter S2 der die Wandlerstufe P2 taktet,
- Eine Lichtquelle L mit Bezugspotential Z2, wobei die Lichtquelle von der Wandlerstufe P2 mit Energie versorgt wird,
- Das Steuersignal st1 des ersten Schalters S1 ist über eine galvanische Trennung G2 mit der Steuereinheit C1 verbunden.

Gemäß der Erfindung kann die gesamte Regelung und Ansteuerungslogik auf der Sekundärseite der galvanischen Trennung liegen. Weiterhin kann die gesamte Regelung und Ansteuerungslogik auf der Sekundärseite der galvanischen Trennung in einen IC integriert sein (es kann auch die isolierte Ansteuerung integriert sein, z.B. per integrierter Luftspule).

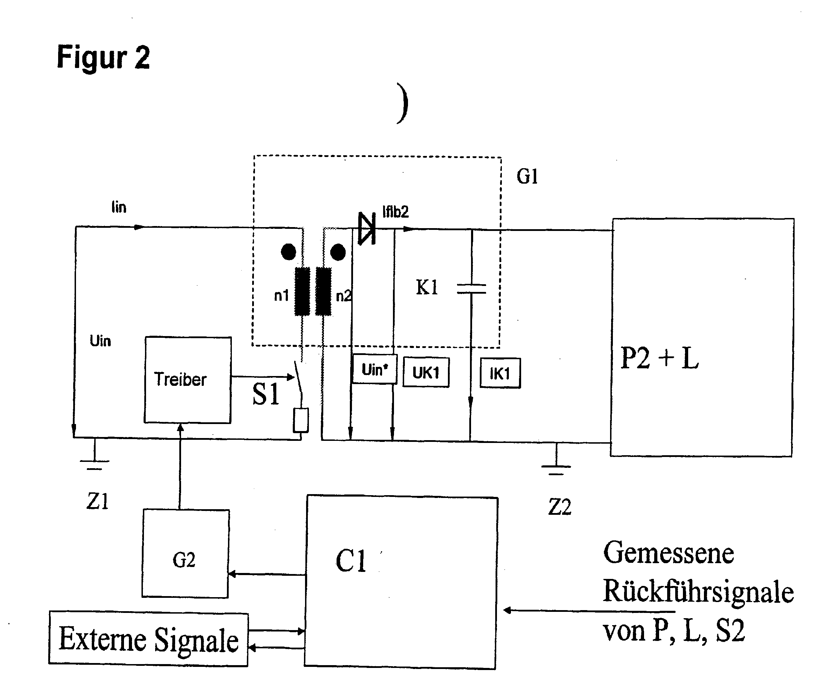

Unter Bezugnahme auf Figur 2 wird nunmehr ein weiteres Ausführungsbeispiel der Erfindung erläutert. Bei diesem Ausführungsbeispiel ist die erste Wandlerstufe P1 und die erste Potentialtrennung G1 integriert ausgeführt. Genauer gesagt, ist in diesem Ausführungsbeispiel als Vorwärtswandler ausgeführt, bei dem also ein Transformator mit Wicklungen N1, N2 primärseitig über den Schalter S1 getaktet ist. Die beiden Wicklungen N1 und N2 sind gleichsinnig gewickelt, so dass die Übertragung von Energie immer dann erfolgt, wenn der Schalter S1 angesteuert durch die digital integrierte Steuereinheit C1 über die Potentialtrennungsstufe G2 eingeschaltet ist. Auf der Primärseite des Vorwärtswandlers, d.h. an der Wicklung N1 liegt also die Netzspannung an, die mit Uᵢₙ bezeichnet ist und ausgangsseitig in eine Spannung Uₒᵤₜ umgewandelt wird. Über eine Diode ist ein Strom I_{FLB2}, der ein Energiespeicherelement K1 auflädt, an dem sich eine Spannung U_{K1} einstellt. Dieses Energiespeicherelement K1 kann beispielsweise einen Kondensator oder eine Batterie sein. Somit stellt sich an dem Energiespeicherelement K1 eine stabilisierte Zwischenspannung U_{K1} ein, ausgehend von der die zweite Wandlerstufe P2 und die Leuchtmittel L gespeist werden können.

Wie in Figur 2 ersichtlich, kann die digital integrierte Steuereinheit C1 dazu ausgebildet sein, externe Signale entgegenzunehmen bzw. beispielsweise über eine angeschlossene Busleitung Signale auszugeben. Bei diesen Signalen kann es sich beispielsweise um Befehle (wie beispielsweise Ein- oder Ausschaltbefehle bzw. Dimmwertvorgaben) oder Statusinformation (insbesondere die Information bzgl. eines Netzspannungsausfalls im Falle der Anwendung der Erfindung auf Notbeleuchtungen) handeln.

Bei der Ausgestaltung von Figur 2 können der digital integrierten Steuereinheit C1 Messsignale von der zweiten Wandlerstufe P2, von den Leuchtmitteln L oder vom Schalter S2 des zweiten Wandlers P2 zurückgeführt werden. Dies kann ohne Potentialtrennung erfolgen, da ja die digital integrierte Steuereinheit C1 gemäß dem Ausführungsbeispiel von Figur 2 bzgl. der Netzspannungsseite über das Potentialtrennungselement G2 abgekoppelt ist.

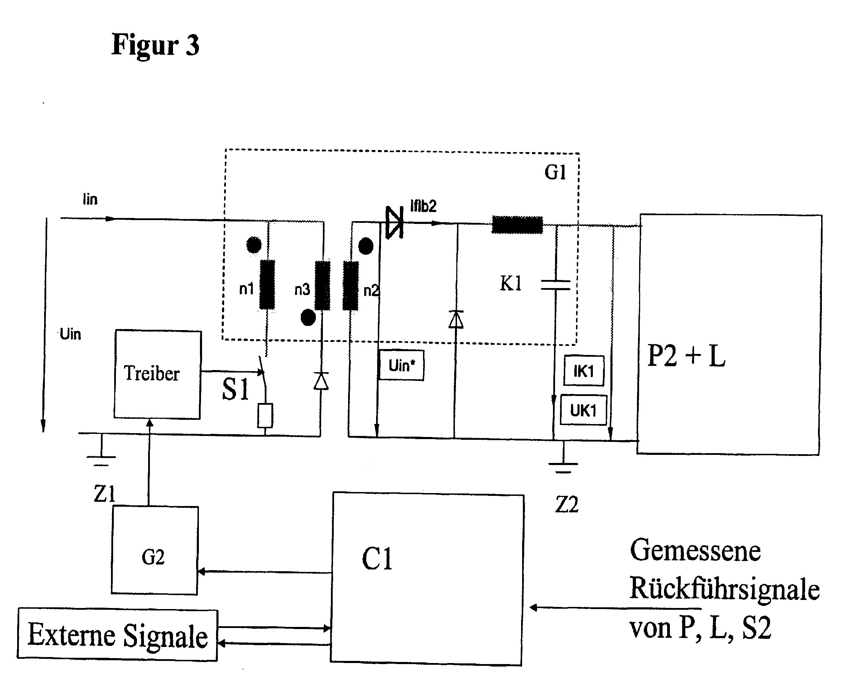

Figur 3 zeigt eine Abwandlung des Ausführungsbeispiels von Figur 2 dahingehend, dass der Vorwärtswandler nunmehr für den kontinuierlichen Betrieb (continuous mode) ausgelegt ist. Dazu ist im Wesentlichen primärseitig eine dritte Wicklung M3 vorgesehen, zu der in Serie eine Diode geschaltet ist, und wobei die Wicklung der dritten Spule N3 gegensinnig zu den ersten Spulen N1 und N2 ist. Diese Spule N3 dient dazu, die Magnetisierung der primärseitigen Spule N1 abzubauen.

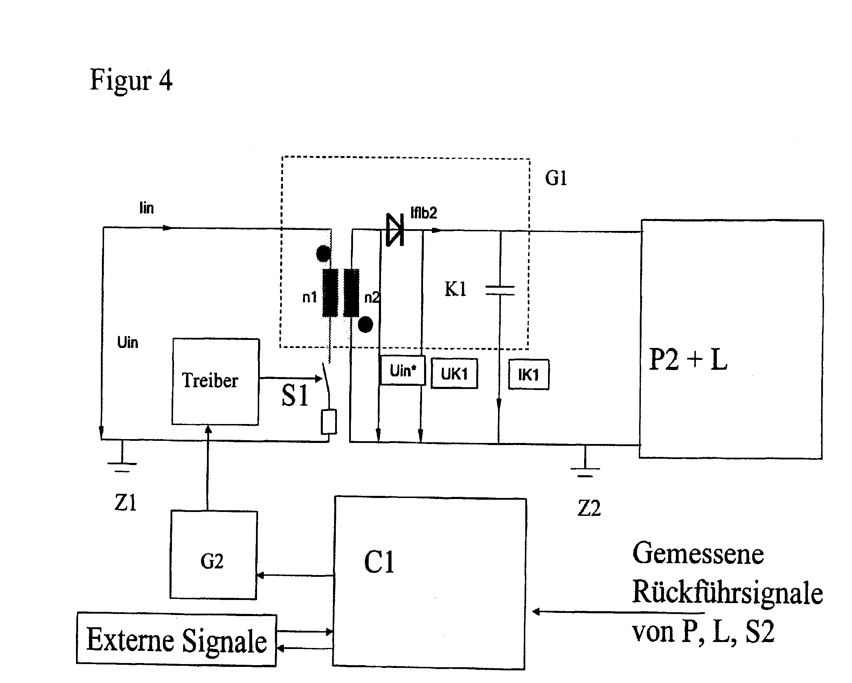

Figur 4 zeigt ein weiteres Ausführungsbeispiel, dass sich von den Ausführungsbeispielen von Figur 2 und Figur 3 dahingehend unterscheidet, dass die erste Wandlerstufe P1 gemeinsam mit der Potentialtrennung G1 als Flyback-Konverter (Sperrwandler) ausgebildet ist. Dabei ist also wiederum ein Transformator mit Wicklungen N1 und N2 vorgesehen, der primärseitig über den Schalter S1 getaktet ist, der wiederum potentialgetrennt durch die Potentialtrennung G2 von der digital integrierten Steuereinheit C1 aus angesteuert ist. Indessen ist bei dem Sperrwandler vorgesehen, dass die Wicklungen N1 und N2 gegensinnig gewickelt sind. Somit überträgt der Flyback-Konverter dann auf die Sekundärseite Energie, wenn der Schalter S1 angesteuert durch die digital integrierte Steuereinheit C1 geöffnet ist.

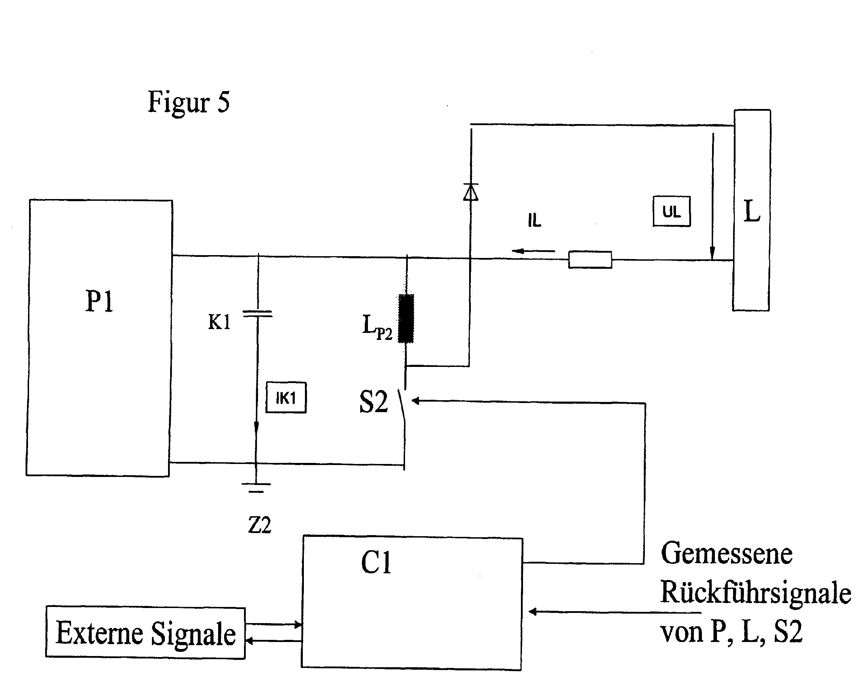

Figur 5 zeigt nunmehr detailliert eine mögliche Ausgestaltung der zweiten Wandlerstufe, wobei sich diese zweite Wandlerstufe P2 gemäß Figur 5 mit jeder der Implementierung der ersten Wandlerstufe P1 mit Potentialtrennung G1 gemäß den Figuren Fig. 2, Fig. 3 oder Fig. 4 kombinieren lässt.

Bei diesem Schaltregler gemäß Figur 5 wird also ein Leuchtmittel L, an dem eine Spannung U_{L} abfällt und durch einen Strom I_{L} durchflossen wird, ausgehend von der stabilisierten Zwischenspannung an dem Energiespeicherelement K1 versorgt.

Ohne Potentialtrennung steuert in diesem Fall die digital integrierte Steuereinheit C1 den Schalter C2 der zweiten Wandlerstufe P2 an, der in Serie zu einer Induktivität L_{P2} geschaltet ist. Durch Wahl der Frequenz und/oder des Tastverhältnisses der Ansteuerung des Schalters S2 lässt sich somit die Spannung an dem Energiespeicherelement K1 in einem verhältnismäßig großen Bereich in eine für den Betrieb der Leuchtmittel L geeignete Spannung herauf- oder herabsetzen.

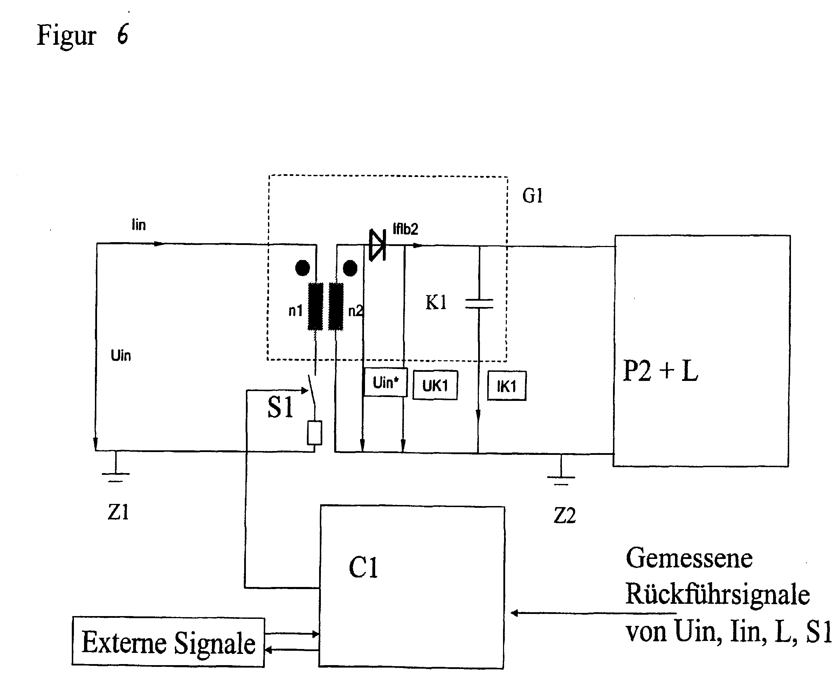

Figur 6 zeigt nunmehr ein Ausführungsbeispiel, das sich von dem Ausführungsbeispiel gemäß der Implementierung von Figur 2 bis Figur 5 grundlegend dahingehend unterscheidet, dass nunmehr die digital integrierte Steuereinheit C1 nicht von der Netzspannungsseite, d.h. in diesem Fall der Primärseite integrierten Potentialtrennung/ Wandlerschaltung P/G1 getrennt ist. Ohne die Potentialtrennung steuert also die digital integrierte Steuereinheit C1 die erste Wandlerstufe P1 und genauer gesagt in diesem Beispiel einen Schalter S1 in Serie zu der primärseitigen Wicklung N1 des Vorwärtswandlers an.

Selbstverständlich kann die Ansteuerung ohne Potentialtrennung ausgehend von der digitalen integrierten Steuerschaltung C1 auch zusammen mit einem Sperrwandler wie in Figur 4 gezeigt bzw. einen für die kontinuierliche Betriebsart ausgelegten Vorwärtswandler gemäß Figur 3 verwenden.

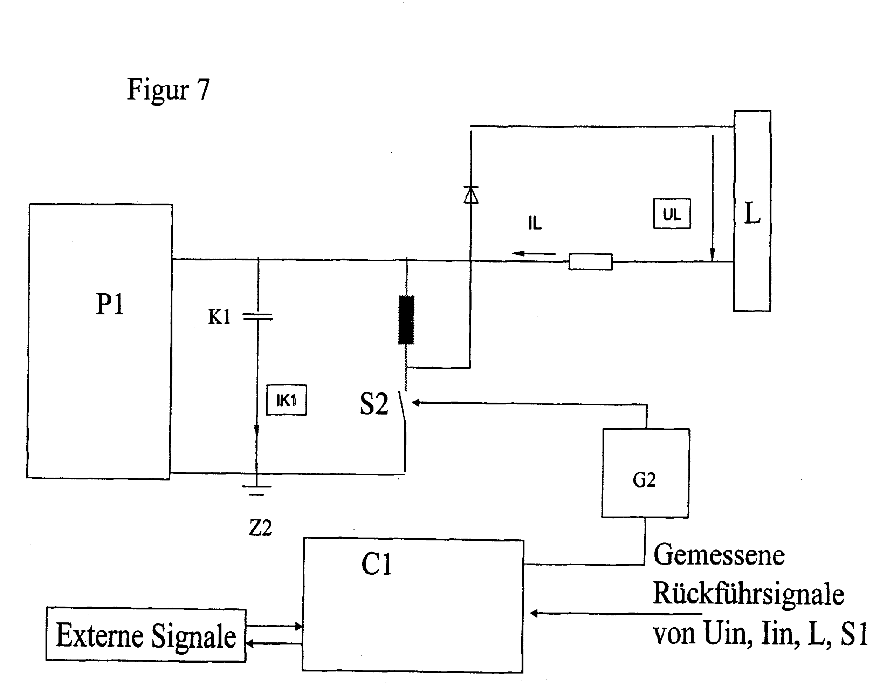

Falls also wie in Figur 6 gezeigt, die digital integrierte Steuereinheit C1 primärseitig nicht von der Netzspannung potentialgetrennt ist, wird vorzugsweise wie in Figur 7 gezeigt, die Ansteuerung der zweiten Wandlerstufe P2, und in dem dargestellten Fall des Schalters S2 der zweiten Potentialwandlerstufe P2 ausgehend von der digital integrierten Steuerschaltung C1 über ein Potentialtrennungselement G2 ausgeführt.

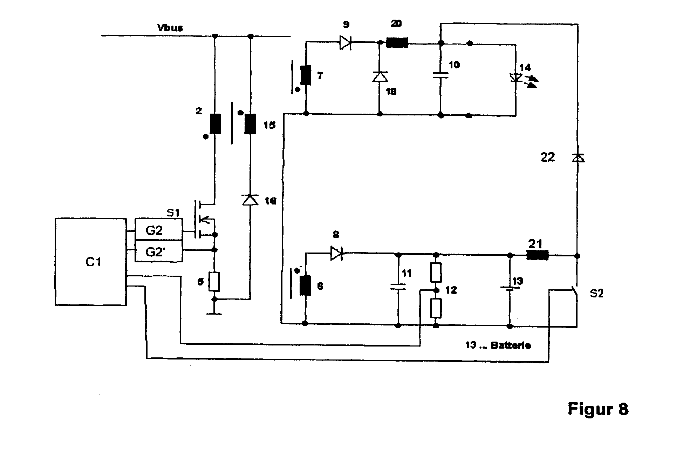

Bei der Ausführungsform von Figur 8 ist ein Flyback-Konverter mit Wicklungen 2, 6 zum Laden einer Batterie 13 mit einem Durchfluß-Wandler (Wicklungen 2, 7) zum Betreiben einer LED 14 gekoppelt. Weiterhin kann die LED 14 auch über eine zweite Schaltstufe (mittels des Schalters S2) ausgehend von der Batterie 13 betrieben werden, wenn keine Netzspannung anliegt.

Die primärseitige Schaltstufe P1 wird durch die Primärwicklung 2 und die Freilaufwicklung 15 mit der Freilaufdiode 16 sowie den optionalen Stromshunt 5 gebildet. Durch den Schalter S1 wird die Energieaufnahme durch P1 gesteuert. Der Schalter S1 wird über ein potentialtrennendes Glied G2 durch den IC C1 angesteuert. Der optionalen Stromshunt 5 kann entweder über einen potentialgetrennten Pfad G2' ein Mess- oder Fehlersignal an den IC C1 übertragen oder aber direkt über eine direkte Abschaltung den Schalter S1 im Fehlerfall deaktivieren.

Der Transformator mit seiner Primärwicklung 2, der Freilaufwicklung 15 und den Sekundärwicklungen 6 und 7 bildet das potentialtrennende Glied G1.

Die Kondensatoren 10 und 11 und die wiederaufladbare Batterie 13 bilden den Energiespeicher K1.

Die Schaltstufe P2 wird aus den Sekundärseiten 6, 7 des Trafos sowie dem der wiederaufladbaren Batterie 13 nachfolgenden Buck-Boost Konverter mit dem Schalter S2 gebildet. Der der wiederaufladbaren Batterie 13 nachfolgende Buck-Boost Konverter wird durch den Schalter S2 angesteuert und durch die Drossel 21 und die Freilaufdiode 22 gebildet. Wenn der Schalter S2 eingeschaltet wird, wird die Drossel 21 aufmagnetisiert. Wird der Schalter S2 geöffnet, treibt die Drossel 21 den Strom durch die Diode 22, die LED 14 über den Rücklaufpfad (über 6 und 8) weiter. Aufgrund der Ladung des Kondensators 10 und der Spannungsverhältnisse kann auch während der Aufladephase (S2 eingeschaltet) ein Strom durch die LED 14 fliessen.

Die Ladeschaltung für die wiederaufladbare Batterie 13 wird durch die Sekundärseite 6 und die Diode 8 sowie einen Glättungskondensator 11 gebildet. Anhand des Spannungsteilers 12 kann der IC C1 auf die Ladespannung und auch auf die Spannung an der Primärseite des Trafos und somit auf die Netzspannung schließen.

Die LED-Betriebsschaltung für den Netzbetrieb wird durch durch die Sekundärseite 7 und die Diode 9 und 18 eine Glättungsdrossel 20 sowie einen Glättungskondensator 10 gebildet, welche die Sekundärseite eines Durchfluß-Wandlers bilden.

Die Kombination von Durchfluß-Wandler und Flyback-Konverter ermöglicht eine unabhängige Steuerung der beiden Sekundärseiten. Während die übertragene Leistung des Flyback-Konverter stark von dem Einschaltverhältnis des Schalters S1 abhängt, kann durch entsprechende Auslegung des Durchfluß-Wandlers (v.a. Selektion des Kernes des Trafos) über einen weiten Bereich von Einschaltverhältnissen eine konstante Leistung übertragen werden. Somit ergibt sich die Möglichkeit, dass die wiederaufladbare Batterie 13 gemäß ihrer Ladekurve nachgeladen wird, während die LED(s) 14 gleichmäßig betrieben wird/werden (somit wird gleiche Helligkeit erreicht).

Sofern die Einstellung der Helligkeit der LED wichtig ist und die Nachladung der wiederaufladbaren Batterie 13 nur zweitrangig ist, kann auch die Zuordnung von Durchfluß-Wandler und Flyback-Konverter getauscht werden.

Eine typische Anwendung eines solches Konverters ist eine Notbeleuchtung mit LED, beispielsweise für sog. "EXIT"-Zeichen (Rettungsweganzeige) oder auch die Fluchtwegebeleuchtung.

Gemäss dem Ausführungsbeispiel von Figur 8 steuert also die Steuereinheit C1 potentialgetrennt eine kombinierte Wandlerstufe P1 an, die einerseits einen Energiespeicher und andererseits, parallel dazu, die Leuchtmittel versorgt. Mittels des Energiespeichers 13 kann dann eine zweite Wandlerstufe mit dem Schalter S2 (der nicht potentialgetrennt durch die Steuereinheit C1 angesteuert ist) selektiv die Leuchtmittel 14 versorgen.

## Patentansprüche

1. Betriebsgerät zum Betreiben einer Lichtquelle, insbesondere einer LED, aufweisend:
- Eine erste mit Netzspannung versorgte und potentialgetrennte Leistungswandlerstufe (P1) mit einem ersten Bezugspotential (Z1),
- Eine zweite Leistungswandlerstufe (P2) mit einem zweiten Bezugspotential (Z2), die mit der Sekundärseite der ersten Leistungswandlerstufe (P1) verbunden ist,
- Eine vorzugsweise digitale und auf einem potential liegende Steuereinheit (C1), die über eine zweite Potentialtrennungseinheit (G2) einen Leistungsschalter (S1) der ersten Leistungswandlerstufe (P1) ansteuert und die zweite Leistungswandlerstufe (P2) ohne Potentialtrennung ansteuert,
- Zumindest einen Leistungsschalter (S2), der die zweite Wandlerstufe (P2) taktet, und
- Ein Leuchtmittel (L), das von der zweiten Wandlerstufe (P2) mit Energie versorgt wird,
wobei die Steuereinheit (C1) einen ersten Regelkreis für das Ansteuern des Leistungsschalters (S1) der ersten Leistungswandlerstufe (P1) und einen zweiten Regelkreis für das Ansteuern des Leistungsschalters (S2) der zweiten Leistungswandlerstufe (P2) aufweist.

2. Betriebsgerät nach Anspruch 1,
bei dem die zweite Wandlerstufe (P2) zumindest einen Leistungsschalter (S2) aufweist, der durch die Steuereinheit (C1) vorzugsweise ohne Potentialtrennung angesteuert ist.

3. Betriebsgerät nach einem der vorhergehenden Ansprüche,
bei dem die zweite Potentialtrennungseinheit (G2)in die Steuereinheit (C1) bspw. mittels integrierter Luftspule integriert ist oder als externer Transformator ausgebildet ist.

4. Betriebsgerät nach einem der vorhergehenden Ansprüche,
bei dem auf der Sekundärseite des ersten Potentialtrennungselementes (G1) ein Energiespeicherelement (K1) bspw. in Form eines Kondensators oder einer Batterie vorgesehen ist, an dem eine stabilisierte Zwischenspannung zur Versorgung der zweiten Wandlerstufe (P2) bereitgestellt ist.

5. Betriebsgerät zum Betreiben einer Lichtquelle, insbesondere einer LED, aufweisend:
- Eine erste mit Netzspannung versorgte und potentialgetrennte Leistungswandlerstufe (P1) mit einem ersten Bezugspotential (Z1),
- Eine zweite Leistungswandlerstufe (P2) mit einem zweiten Bezugspotential (Z2), die mit der Sekundärseite der ersten Leistungswandlerstufe (P1) verbunden ist,
- Eine vorzugsweise digitale und auf einem potential liegende Steuereinheit (C1), die ohne Potentialtrennung einen Schalter (S1) der ersten Leistungswandlerstufe (P1) ansteuert und über eine zweite Potentialtrennungseinheit (G2) die zweite Leistungswandlerstufe (P2) ansteuert,
- Zumindest einen Leistungsschalter (S2) der die zweite Wandlerstufe (P2) taktet, und
Ein Leuchtmittel (L), das von der zweiten Wandlerstufe (P2) mit Energie versorgt wird,
wobei die Steuereinheit (C1) einen ersten Regelkreis für das Ansteuern des Leistungsschalters (S1) der ersten Leistungswandlerstufe (P1) und einen zweiten Regelkreis für das Ansteuern des Leistungsschalters (S2) der zweiten Leistungswandlerstufe (P2) aufweist.

6. Betriebsgerät nach Anspruch 5,
bei dem der Steuereinheit (C1) Signale zurückgeführt werden, die sämtlich auf der Primärseite des ersten Potentialtrennungselementes (G1) abgegriffen sind.

7. Betriebsgerät nach Anspruch 5,
bei dem der Steuereinheit (C1) Signale von der Sekundärseite des ersten Potentialtrennungselementes (G1) unter Potentialtrennung oder optisch zurückgeführt werden.

8. Betriebsgerät nach einem der vorhergehenden Ansprüche,
bei der die ersten Wandlerstufe (P1) und die erste Potentialtrennungseinheit (G1) in eine Schaltung integriert sind.

9. Betriebsgerät nach Anspruch 7,
bei dem die ersten Wandlerstufe (P1) und die erste Potentialtrennungseinheit (G1) in Form eines Vorwärtswandlers ausgeführt sind, der vorzugsweise diskontinuierlich betrieben ist.

10. Betriebsgerät nach Anspruch 7,
bei dem die ersten Wandlerstufe (P1) und die erste Potentialtrennungseinheit (G1) in Form eines Vorwärtswandlers ausgeführt sind, der resonant diskontinuierlich betrieben ist.

11. Betriebsgerät nach einem der vorhergehenden Ansprüche, dem externe Informationen oder Befehle zugeführt sind.

12. Betriebsgerät nach einem der vorhergehenden Ansprüche,
bei dem die zweite Potentialtrennungseinheit (G2)in die Steuereinheit (C1) bspw. mittels integrierter Luftspule integriert ist oder als externer Transformator ausgebildet ist.

13. Betriebsgerät nach einem der vorhergehenden Ansprüche,
bei dem der Steuereinheit (C1) Signale von der Sekundärseite des Potentialtrennungselementes (G1) und somit mit Bezug auf das zweiten Bezugspotential (Z2) unter Potentialtrennung oder optisch zurückgeführt werden.

14. Notlichtbeleuchtung,
aufweisend ein Betriebsgerät nach einem der vorhergehenden Ansprüche.

## Claims

1. An operating device for the operation of a light source, in particular a LED, having:
- A first power converter stage (P1) which is electrically isolated and supplied with mains voltage with a first reference potential (Z1),
- A second power converter stage (P2) with a second reference potential (Z2), which is connected with the secondary side of the first power converter stage (P1),
- A control unit (C1) preferably digital and supplied with potential, which control unit via a second potential isolation unit (G2) controls a power switch (S1) of the first power converter stage (P1) and controls the second power converter stage (P2) without potential isolation,
- At least a power switch (S2), which clocks the second converter stage (P2), and
- An illuminant (L), which is provided with energy by the second converter stage (P2), wherein the control unit (C1) has a first control loop for the control of the power switch (S1) of the first power converter stage (P1) and a second control loop for the control of the power switch (S2) of the second power converter stage (P2).

2. An operating device according to claim 1, in which the second converter stage (P2) has at least one power switch (S2), which is controlled by the control unit (C1) preferably without potential isolation.

3. An operating device according to one of the preceding claims, in which the second potential isolation unit (G2) is integrated into the control unit (C1), for example, by means of an integrated air coil or is designed as an external transformer.

4. An operating device according to one of the preceding claims, in which on the secondary side of the first potential isolation unit (G1) an energy storage element (K1) for example in the form of a capacitor or a battery is provided, on which a stabilized intermediate voltage is provided for the supply of the second converter stage (P2).

5. An operating device for the operation of a light source, in particular a LED, having:
- A first power converter stage (P1) which is electrically isolated and supplied with mains voltage with a first reference potential (Z1),
- A second power converter stage (P2) with a second reference potential (Z2), which is connected with the secondary side of the first power converter stage (P1),
- A control unit (C1) preferably digital and supplied with potential, which control unit without potential isolation controls a power switch (S1) of the first power converter stage (P1) and via a second potential isolation unit (G2) controls the second power converter stage (P2),
- At least a power switch (S2), which clocks the second converter step (P2), and
- An illuminant (L), which is provided with energy by the second converter stage (P2), wherein the control unit (C1) has a first control loop for the control of the power switch (S1) of the first power converter stage (P1) and a second control loop for the control of the power switch (S2) of the second power converter stage (P2).

6. An operating device according to claim 5, in which signals, which are all tapped on the primary side of the first potential isolation unit (G1), are traced back to the control unit (C1).

7. An operating device according to claim 5, in which signals from the secondary side of the first potential isolation unit (G1) are traced back to the control unit (C1) under potential isolation or optically.

8. An operating device according to one of the preceding claims, in which the first converter stage (P1) and the first potential isolation unit (G1) are integrated into a circuit.

9. An operating device according to claim 7, in which the first converter stage (P1) and the first potential isolation unit (G1) are designed in the form of a forward converter, which is preferably operated discontinuously.

10. An operating device according to claim 7, in which the first converter stage (P1) and the first potential isolation unit (G1) are designed in the form of a forward converter, which is operated resonantly discontinuously.

11. An operating device according to one of the preceding claims, to which external information or commands are fed.

12. An operating device according to one of the preceding claims, in which the second potential isolation unit (G2) is integrated into the control unit (C1), for example, by means of an integrated air coil or is designed as an external transformer.

13. An operating device according to one of the preceding claims, in which signals from the secondary side of the first potential isolation unit (G1) and thus with respect to the second reference potential (Z2) are traced back to the control unit (C1) under potential isolation or optically.

14. Emergency lighting system, having an operating device according to one of the preceding claims.

## Revendications

1. Appareil permettant de faire fonctionner une source de lumière, en particulier une DEL, présentant :
- un premier étage de convertisseur de puissance (P1) alimenté par une tension de réseau et à potentiel séparé, avec un premier potentiel de référence (Z1),
- un deuxième étage de convertisseur de puissance (P2) avec un deuxième potentiel de référence (Z2), qui est connecté au côté secondaire du premier étage de convertisseur de puissance (P1),
- une unité de commande (C1), de préférence numérique et placée à un potentiel, qui, par le biais d'une deuxième unité de séparation de potentiel (G2), pilote un disjoncteur (S1) du premier étage de convertisseur de puissance (P1) et pilote le deuxième étage de convertisseur de puissance (P2) sans séparation de potentiel,
- au moins un disjoncteur (S2) qui cadence le deuxième étage de convertisseur (P2), et
- un moyen d'éclairage (L) qui est alimenté en énergie par le deuxième étage de convertisseur (P2), l'unité de commande (C1) présentant une première boucle de régulation pour le pilotage du disjoncteur (S1) du premier étage de convertisseur de puissance (P1) et une deuxième boucle de régulation pour le pilotage du disjoncteur (S2) du deuxième étage de convertisseur de puissance (P2).

2. Appareil selon la revendication 1,
dans lequel le deuxième étage de convertisseur (P2) présente au moins un disjoncteur (S2) qui est piloté par l'unité de commande (C1) de préférence sans séparation de potentiel.

3. Appareil selon l'une des revendications précédentes,
dans lequel la deuxième unité de séparation de potentiel (G2) est intégrée dans l'unité de commande (C1) par exemple au moyen d'une bobine à air intégrée ou est constituée en tant que transformateur externe.

4. Appareil selon l'une des revendications précédentes,
dans lequel, sur le côté secondaire du premier élément de séparation de potentiel (G1), il est prévu un élément accumulateur d'énergie (K1), par exemple sous forme d'un condensateur ou d'une batterie, sur lequel une tension intermédiaire stabilisée est fournie pour l'alimentation du deuxième étage de convertisseur (P2).

5. Appareil permettant de faire fonctionner une source de lumière, en particulier une DEL, présentant :
- un premier étage de convertisseur de puissance (P1) alimenté par une tension de réseau et à potentiel séparé, avec un premier potentiel de référence (Z1),
- un deuxième étage de convertisseur de puissance (P₂) avec un deuxième potentiel de référence (Z₂), qui est connecté au côté secondaire du premier étage de convertisseur de puissance (P1),
- une unité de commande (C1) de préférence numérique et placée à un potentiel, qui pilote un disjoncteur (S1) du premier étage de convertisseur de puissance (P1) sans séparation de potentiel et qui pilote le deuxième étage de convertisseur de puissance (P2) par le biais d'une deuxième unité de séparation de potentiel (G2),
- au moins un disjoncteur (S2) qui cadence le deuxième étage de convertisseur (P2), et
- un moyen d'éclairage (L) qui est alimenté en énergie par le deuxième étage de convertisseur (P2), l'unité de commande (C1) présentant une première boucle de régulation pour le pilotage du disjoncteur (S1) du premier étage de convertisseur de puissance (P1) et une deuxième boucle de régulation pour le pilotage du disjoncteur (S2) du deuxième étage de convertisseur de puissance (P2).

6. Appareil selon la revendication 5,
dans lequel des signaux qui sont tous prélevés sur le côté primaire du premier élément de séparation de potentiel (G1) sont renvoyés à l'unité de commande (C1).

7. Appareil selon la revendication 5,
dans lequel des signaux provenant du côté secondaire du premier élément de séparation de potentiel (G1) sont renvoyés à l'unité de commande (C1) avec séparation de potentiel ou optiquement.

8. Appareil selon l'une des revendications précédentes, dans lequel le premier étage de convertisseur (P1) et la première unité de séparation de potentiel (G1) sont intégrés dans un circuit.

9. Appareil selon la revendication 7,
dans lequel le premier étage de convertisseur (P1) et la première unité de séparation de potentiel (G1) sont réalisés sous la forme d'un convertisseur progressif qui est mis en marche de préférence de façon discontinue.

10. Appareil selon la revendication 7,
dans lequel le premier étage de convertisseur (P1) et la première unité de séparation de potentiel (G1) sont réalisés sous la forme d'un convertisseur progressif qui est mis en marche de façon discontinue et résonante.

11. Appareil selon l'une des revendications précédentes, auquel des informations ou instructions externes sont acheminées.

12. Appareil selon l'une des revendications précédentes, dans lequel la deuxième unité de séparation de potentiel (G2) est intégrée dans l'unité de commande (C1) par exemple au moyen d'une bobine à air intégrée ou est constituée en tant que transformateur externe.

13. Appareil selon l'une des revendications précédentes, dans lequel des signaux en provenance du côté secondaire de l'élément de séparation de potentiel (G1), et donc en référence au deuxième potentiel de référence (Z2), sont renvoyés à l'unité de commande (C1) avec séparation de potentiel ou optiquement.

14. Eclairage de secours,
présentant un appareil selon l'une des revendications précédentes.
